# EUROPÄISCHE PATENTANMELDUNG

(11) **EP 4 644 747 A1**
(43) Veröffentlichungstag der Anmeldung: **05.11.2025**
(21) Anmeldenummer: 25169011.1
(22) Anmeldetag: 08.04.2025
(51) Int. Cl.: F16K 31/06, F16K 27/02

(54) **MAGNETVENTIL UND VERFAHREN ZU DESSEN MONTAGE**

(30) Priorität: 29.04.2024 CN 202410526977
(71) Anmelder: ZF Commercial Vehicle Systems (Qingdao) Co., Ltd., Qingdao 266510 (CN); ZF CV Systems Europe BV, 1170 Brüssel (BE)
(72) Erfinder: Zhang, Zhijie, Shanghai (CN); Bia o , Rafa, GODZIKOWICE (PL)
(74) Vertreter: ZF Friedrichshafen AG

(57) **Zusammenfassung**

Die vorliegende Erfindung betrifft das technische Gebiet der Fahrzeugbauteile, insbesondere die Gestaltung von Magnetventilen. Die vorliegende Erfindung stellt ein Magnetventil und ein Verfahren zu dessen Montage bereit. Das Magnetventil umfasst: einen beweglichen Eisenkern und einen feststehenden Eisenkern, die einander gegenüberliegend angeordnet sind, eine Feder, die den beweglichen Eisenkern elastisch trägt, eine Spulenanordnung, die außerhalb des feststehenden Eisenkerns angeordnet ist, und ein erstes Gehäuse, das durch Umspritzen außerhalb der Spulenanordnung ausgebildet ist, wobei die Spulenanordnung einen Spulenrahmen, der auf dem feststehenden Eisenkern aufgesetzt ist, und eine Unterlegscheibe umfasst. Dabei stehen die Unterlegscheibe und eine Endfläche des Spulenrahmens in einer Axialrichtung miteinander in Eingriff. Die Endfläche des Spulenrahmens und/oder die Unterlegscheibe begrenzen/begrenzt den beweglichen Eisenkern und die Feder in der Axialrichtung, und die Endfläche des Spulenrahmens und/oder die Unterlegscheibe begrenzen/begrenzt die Feder in einer Radialrichtung. Durch die Verbesserung des Spulenrahmens und der Unterlegscheibe des Magnetventils gemäß der vorliegenden Erfindung wird das Problem der spritzgussbedingten Alterung des Dichtungsrings gelöst, eine Positionsverschiebung der Feder vermieden und das Wickelfenster effektiv vergrößert, ohne die Konturabmessung und die Schnittstellengröße des Magnetventils zu verändern.

## Beschreibung

### Technisches Gebiet

Die vorliegende Erfindung betrifft das technische Gebiet der Fahrzeugbauteile, insbesondere die Gestaltung von Magnetventilen, insbesondere ein Magnetventil und ein Verfahren zu dessen Montage.

### Stand der Technik

Magnetventile werden häufig als Stellglieder für die Fluidsteuerung von Fahrzeugen eingesetzt, z. B. für die Brems-, Getriebe-, Motor- und Aufhängungssteuerung usw.

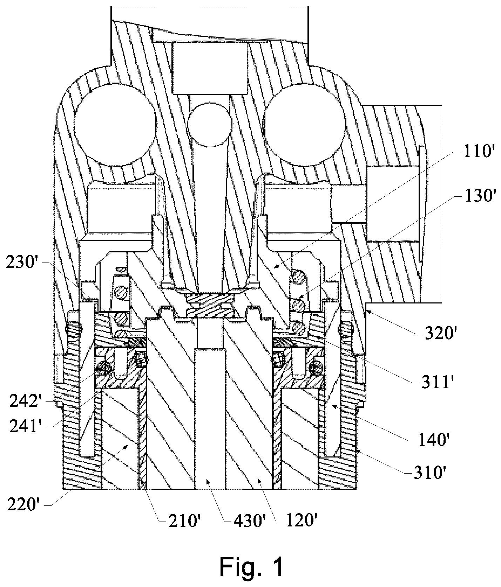

Die Hauptkomponenten eines Magnetventils umfassen eine Ventilkernanordnung und eine Spulenanordnung. Fig. 1 zeigt eine Teilstruktur eines bestehenden Magnetventils. Wie in Fig. 1 gezeigt, umfasst die Ventilkernanordnung: einen beweglichen Eisenkern 110' und einen feststehenden Eisenkern 120', die einander gegenüberliegend angeordnet sind, eine Feder 130', die den beweglichen Eisenkern 110' elastisch trägt, ein außerhalb des beweglichen Eisenkerns 110' und des feststehenden Eisenkerns 120' angeordnetes Jocheisen 140' und andere Komponenten. Die Spulenanordnung, die außerhalb des feststehenden Eisenkerns 120' angeordnet ist, umfasst einen Spulenrahmen 210', der auf dem feststehenden Eisenkern 120' aufgesetzt ist, eine Spule 220', die auf den Spulenrahmen 210' gewickelt ist, und eine gegen den Spulenrahmen 210' drückende Unterlegscheibe 230' und andere Komponenten. Außerhalb der Spulenanordnung ist ein erstes Gehäuse 310' durch Umspritzen ausgebildet (beim Ausformen des ersten Gehäuses 310' durch Spritzgießen ist gleichzeitig ein Stufensitz 311' auch durch Spritzgießen ausgeformt). Außerhalb des beweglichen Eisenkerns 110' kann ferner ein zweites Gehäuse 320' vorgesehen sein. Das erste Gehäuse 310' ist mit einer Luftöffnung versehen (die Luftöffnung ist in den Figuren nicht speziell gezeigt, beispielsweise kann die Luftöffnung im ersten Gehäuse 310' eine Auslassöffnung des Magnetventils sein, ist jedoch nicht darauf beschränkt und kann auch eine Einlassöffnung des Magnetventils sein, und im Folgenden wird beispielhaft beschrieben, dass die Luftöffnung im ersten Gehäuse 310' als Auslassöffnung verwendet wird). Das zweite Gehäuse 320' ist mit einer Luftöffnung versehen (die Luftöffnung ist in den Figuren nicht speziell gezeigt, beispielsweise kann die Luftöffnung im zweiten Gehäuse 320' eine Einlassöffnung des Magnetventils sein, ist jedoch nicht darauf beschränkt und kann auch eine Auslassöffnung des Magnetventils sein, solange das erste Gehäuse 310' bzw. das zweite Gehäuse 320' jeweils mit einer Einlassöffnung und bzw. einer Auslassöffnung versehen ist, und im Folgenden wird beispielhaft beschrieben, dass die Luftöffnung im zweiten Gehäuse 320' als Einlassöffnung verwendet wird). Im feststehenden Eisenkern 120' ist ein Luftkanal, beispielsweise ein Auslasskanal 430', vorgesehen.

Das Magnetventil funktioniert wie folgt: Der bewegliche Eisenkern 110' kann zwischen zwei Betriebspositionen umgeschaltet werden. In einer ersten Betriebsposition wird durch ein Ende des beweglichen Eisenkerns 110' der Auslasskanal 430' blockiert, so dass eine Einlassöffnung und eine Auslassöffnung des Magnetventils miteinander verbunden sind. Insbesondere kann sich der bewegliche Eisenkern 110' unter der Wirkung der Spule 220' in die erste Betriebsposition bewegen, wobei verschiedene Abschnitte des Stufensitzes 311' jeweils den beweglichen Eisenkern 110' und die Feder 130' begrenzen, um zu vermeiden, dass der bewegliche Eisenkern 110' den feststehenden Eisenkern 120' berührt und die Feder 130' durch übermäßige Kompression ihre Rückstellfunktion verliert. In einer zweiten Betriebsposition wird durch das andere Ende des beweglichen Eisenkerns 110' die Einlassöffnung blockiert, so dass der Auslasskanal 430' und die Auslassöffnung miteinander verbunden sind. Insbesondere kann sich der bewegliche Eisenkern 110' unter der Wirkung der Feder 130' in die zweite Betriebsposition bewegen.

Zur Abdichtung des Luftkreislaufs sind zudem ein erster Dichtungsring 241' und ein zweiter Dichtungsring 242' jeweils innerhalb und außerhalb des Spulenrahmens 210' vorgesehen, wobei der erste Dichtungsring 241' durch die Unterlegscheibe 230' und der zweite Dichtungsring 242' durch den Stufensitz 311' angedrückt wird.

Das bestehende Magnetventil weist folgende Probleme auf:

Da der Stufensitz 311' durch Spritzgießen am Spulenrahmen 210' angeformt werden soll, muss der Dichtungsring, insbesondere der zweite Dichtungsring 242' vor dem Spritzgussvorgang, in Position vormontiert werden. Beim Spritzgussvorgang befindet sich die Spritzgussstelle unter hoher Temperatur und hohem Druck in der Nähe des Dichtungsrings, was anfällig für die Alterung des Dichtungsrings ist und wiederum zu einer Beeinträchtigung der Dichtungsleistung des Magnetventils führt.

Zwischen dem Stufensitz 311' und dem feststehenden Eisenkern 120' besteht ein Spalt, und die Feder 130' neigt dazu, sich während des Betriebs des Magnetventils durch eine Positionsverschiebung in dem Spalt einzuklemmen, wodurch eine normale Funktion des beweglichen Eisenkerns verhindert wird.

Das Wickelfenster des Spulenrahmens 210' ist kompakter ausgestaltet, was zu einer unzureichenden elektromagnetischen Kraft für das Magnetventil führt. Bei einem Magnetventil mit größerer elektromagnetischer Kraft muss die Abmessung vergrößert werden, um das Wickelfenster zu vergrößern, was zu einer Vergrößerung der Konturabmessung und der Schnittstellengröße des gesamten Magnetventils führt, wodurch die Anordnung und der Einbau des Magnetventils im Fahrzeug beeinträchtigt werden.

Es sei darauf hingewiesen, dass die oben offenbarten Informationen im Abschnitt "Stand der Technik" nur zur Verbesserung des Verständnisses über den Hintergrund der vorliegenden Erfindung dienen und daher Informationen im Stand der Technik enthalten können, die nicht für die Durchschnittsfachleute auf diesem Gebiet bekannt sind.

### Offenbarung der Erfindung

In Anbetracht dessen stellt die vorliegende Erfindung ein Magnetventil und ein Verfahren zu dessen Montage bereit, um durch die Verbesserung des Spulenrahmens und der Unterlegscheibe des Magnetventils das Problem der spritzgussbedingten Alterung des Dichtungsrings zu lösen, so dass eine Positionsverschiebung der Feder vermieden und das Wickelfenster effektiv vergrößert wird, ohne die Konturabmessung und die Schnittstellengröße des Magnetventils zu verändern.

Gemäß einem Aspekt der vorliegenden Erfindung wird ein Magnetventil bereitgestellt, das umfasst: einen beweglichen Eisenkern und einen feststehenden Eisenkern, die einander gegenüberliegend angeordnet sind, eine Feder, die den beweglichen Eisenkern elastisch trägt, eine Spulenanordnung, die außerhalb des feststehenden Eisenkerns angeordnet ist, und ein erstes Gehäuse, das durch Umspritzen außerhalb der Spulenanordnung ausgebildet ist, wobei die Spulenanordnung einen Spulenrahmen, der auf dem feststehenden Eisenkern aufgesetzt ist, und eine Unterlegscheibe umfasst, wobei die Unterlegscheibe und eine Endfläche des Spulenrahmens in einer Axialrichtung miteinander in Eingriff stehen, wobei die Endfläche des Spulenrahmens und/oder die Unterlegscheibe den beweglichen Eisenkern und die Feder in der Axialrichtung begrenzen/begrenzt, und wobei die Endfläche des Spulenrahmens und/oder die Unterlegscheibe die Feder in einer Radialrichtung begrenzen/begrenzt.

In einigen Ausführungsbeispielen ist vorgesehen, dass die Endfläche des Spulenrahmens mit einem ersten Stützabschnitt, der zur Unterlegscheibe hin vorsteht, versehen ist, wobei der erste Stützabschnitt durch ein Schlitzloch in der Unterlegscheibe hindurchgeht, wobei eine Endfläche des ersten Stützabschnitts den beweglichen Eisenkern in der Axialrichtung begrenzt, und wobei eine Seitenwand des ersten Stützabschnitts die Feder in der Radialrichtung begrenzt.

In einigen Ausführungsbeispielen ist vorgesehen, dass die Unterlegscheibe mit einem zweiten Stützabschnitt, der zur Endfläche des Spulenrahmens hin vorsteht, versehen ist, wobei der zweite Stützabschnitt in eine Nut in der Endfläche des Spulenrahmens fällt, wobei eine untere Fläche des zweiten Stützabschnitts die Feder in der Axialrichtung begrenzt und eine Seitenwand des zweiten Stützabschnitts die Feder in der Radialrichtung begrenzt, und wobei eine innere Ringsendfläche des zweiten Stützabschnitts den beweglichen Eisenkern in der Axialrichtung begrenzt.

In einigen Ausführungsbeispielen ist vorgesehen, dass der zweite Stützabschnitt als ringförmige Nutenstruktur und die Unterlegscheibe als V-förmige Struktur mit dem Schlitzloch in einer inneren Seitenwand ausgebildet ist.

In einigen Ausführungsbeispielen ist vorgesehen, dass die Endfläche des Spulenrahmens auch mit einem dritten Stützabschnitt versehen ist, der zur Unterlegscheibe hin vorsteht und mit dem ersten Stützabschnitt zu einem abgestuften Abschnitt verbunden ist, wobei der abgestufte Abschnitt an dem Schlitzloch freiliegt, und wobei die Unterlegscheibe und der dritte Stützabschnitt die Feder in der Axialrichtung begrenzen.

In einigen Ausführungsbeispielen ist vorgesehen, dass die Unterlegscheibe als ebene, ringförmige Struktur mit dem Schlitzloch ausgebildet ist.

In einigen Ausführungsbeispielen ist vorgesehen, dass der erste Stützabschnitt mehrere am Umfang voneinander beabstandete Teile umfasst.

In einigen Ausführungsbeispielen ist vorgesehen, dass ein erster Dichtungsring an einer Innenwand der Endfläche des Spulenrahmens montiert ist, wobei der erste Dichtungsring durch eine innere Umfangskante der Unterlegscheibe gedrückt und abgedeckt ist.

In einigen Ausführungsbeispielen ist vorgesehen, dass ein zweiter Dichtungsring an einer Außenwand der Endfläche des Spulenrahmens montiert ist, wobei der zweite Dichtungsring durch eine äußere Umfangskante der Unterlegscheibe gedrückt und abgedeckt ist.

Gemäß einem weiteren Aspekt der vorliegenden Erfindung wird ein Verfahren zur Montage eines Magnetventils bereitgestellt, das zur Montage eines Magnetventils nach einem der obigen Ausführungsbeispiele dient. Das Verfahren umfasst: Erhalten eines zu umspritzenden Bauteils, wobei das zu umspritzende Bauteil einen Spulenrahmen umfasst, der auf einem feststehenden Eisenkern aufgesetzt ist; Ausformen eines ersten Gehäuses, das durch Umspritzen außerhalb des zu umspritzenden Bauteils ausgebildet ist; Montieren eines Dichtungsrings an einer Endfläche des Spulenrahmens; Verschweißen einer Unterlegscheibe an der Endfläche des Spulenrahmens, so dass die Unterlegscheibe und die Endfläche des Spulenrahmens in einer Axialrichtung miteinander in Eingriff stehen; und Montieren eines beweglichen Eisenkerns und einer Feder, so dass die Endfläche des Spulenrahmens und/oder die Unterlegscheibe den beweglichen Eisenkern und die Feder in der Axialrichtung begrenzen/begrenzt, und dass die Endfläche des Spulenrahmens und/oder die Unterlegscheibe die Feder in einer Radialrichtung begrenzen/begrenzt.

Gegenüber dem Stand der Technik umfasst die vorliegende Erfindung zumindest die folgenden vorteilhaften Wirkungen.

Dadurch, dass die Unterlegscheibe und die Endfläche des Spulenrahmens in der Axialrichtung miteinander in Eingriff stehen, wird der belegte Raum der Unterlegscheibe und der Endfläche des Spulenrahmens in der Axialrichtung zusammengedrückt, wodurch der belegte Raum des Körpers (d. h. des Wickelfensters) des Spulenrahmens vergrößert wird. Auf diese Weise ist es möglich, die Wicklung und die elektromagnetische Kraft des Magnetventils zu optimieren, ohne die Konturabmessung und die Schnittstellengröße des Magnetventils zu verändern, was eine mögliche Nachrüstung des Magnetventils ermöglicht. Zudem sind die Endfläche des Spulenrahmens und die Unterlegscheibe derart ausgestaltet, dass sie miteinander in Eingriff stehen, was eine feste und zuverlässige Montagestruktur der beiden ermöglicht, wodurch die Stabilität des Magnetventils gewährleistet wird.

Dadurch, dass die Endfläche des Spulenrahmens und/oder die Unterlegscheibe den beweglichen Eisenkern in der Axialrichtung begrenzen/begrenzt, und dass die Endfläche des Spulenrahmens und/oder die Unterlegscheibe die Feder in der Axialrichtung begrenzen/begrenzt, muss an dem Spulenrahmen keine den beweglichen Eisenkern und die Feder begrenzende Spritzgussstruktur ausgebildet sein. Dadurch müssen die Dichtungsringe nicht vor dem Spritzgussvorgang vormontiert werden, sondern können nach Abschluss des Spritzgussvorgangs und vor der Montage der Unterlegscheibe montiert werden, wodurch das Problem der spritzgussbedingten Alterung des Dichtungsrings wirksam vermieden und die Dichtungsleistung des Magnetventils gewährleistet wird. Zudem werden/wird die Endfläche des Spulenrahmens und/oder die Unterlegscheibe anstelle der Spritzgussstruktur zur Begrenzung des beweglichen Eisenkerns und der Feder verwendet, so dass die Spritzgussstelle unter hoher Temperatur und hohem Druck weiter von der Montagestelle des Dichtungsrings entfernt ist, um eine Verformung der Montagestelle des Dichtrings durch Wärme zu vermeiden.

Dadurch, dass die Endfläche des Spulenrahmens und/oder die Unterlegscheibe die Feder in der Radialrichtung begrenzen/begrenzt, wird eine Positionsverschiebung der Feder im Betrieb des Magnetventils vermieden und eine normale Betätigung des beweglichen Eisenkerns und damit eine normale Funktion des Magnetventils sichergestellt.

Es ist zu verstehen, dass die obige allgemeine Beschreibung und die nachfolgende detaillierte Beschreibung lediglich beispielhaft und erläuternd sind und die vorliegende Erfindung nicht einschränken können.

### Kurzbeschreibung der Figuren

Die Zeichnungen hierin sind in die Beschreibung aufgenommen und bilden einen Teil dieser Beschreibung. Dabei zeigen sie Ausführungsbeispiele entsprechend der vorliegenden Erfindung und dienen zusammen mit der Beschreibung zur Erläuterung der Prinzipien der vorliegenden Erfindung. Offensichtlich stellen die Figuren in der folgenden Erläuterung nur einige Ausführungsbeispiele der vorliegenden Erfindung dar, und die Durchschnittsfachleute auf diesem Gebiet können auf der Grundlage der Figuren andere Figuren erhalten, ohne kreative Arbeiten zu haben.
Fig. 1 zeigt eine schematische Ansicht einer Teilstruktur eines bestehenden Magnetventils;
Fig. 2 bis 4 zeigen jeweils eine schematische Ansicht einer Teilstruktur eines Magnetventils gemäß einem Ausführungsbeispiel der vorliegenden Erfindung;
Fig. 5 bis 7 zeigen jeweils eine schematische Ansicht einer Teilstruktur eines Magnetventils gemäß einem weiteren Ausführungsbeispiel der vorliegenden Erfindung; und
Fig. 8 zeigt eine schematische Darstellung von Schritten eines Verfahrens zur Montage des Magnetventils gemäß einem Ausführungsbeispiel der vorliegenden Erfindung.

### Ausführliche Ausführungsformen

Im Folgenden werden beispielhafte Ausführungsformen unter Bezugnahme auf die Zeichnungen detaillierter beschrieben. Jedoch können die beispielhaften Ausführungsformen in verschiedenen Formen ausgeführt werden und sollten nicht so verstanden werden, dass sie auf die hier dargelegten Ausführungsformen beschränkt sind. Vielmehr wird durch die Bereitstellung dieser Ausführungsformen die vorliegende Erfindung umfassend und vollständig dargestellt, um somit das Konzept der beispielhaften Ausführungsformen umfassend an die Fachleute auf diesem Gebiet zu übermitteln.

Die Zeichnungen dienen nur zur schematischen Darstellung der vorliegenden Erfindung und müssen nicht unbedingt maßstabsgetreu sein. In den Zeichnungen können gleiche Bezugszeichen für gleiche oder ähnliche Teile stehen, so dass auf eine wiederholte Beschreibung verzichtet wird.

In der Beschreibung der vorliegenden Erfindung basiert die Ausrichtungs- bzw. Positionsbeziehung, die durch Begriffe wie "Oberseite", "Unterseite", "oben", "unten", "innen", "außen" usw. angedeutet ist, auf der in den Zeichnungen gezeigten Ausrichtungs- bzw. Positionsbeziehung und dient lediglich zum Erleichtern sowie Vereinfachen der Beschreibung der vorliegenden Erfindung, aber zeigt nicht an bzw. nicht impliziert, dass das bezeichnete Gerät bzw. Element eine bestimmte Ausrichtung aufweisen oder in einer bestimmten Ausrichtung ausgebildet und betrieben werden muss, weswegen solche Ausrichtungs- bzw. Positionsbeziehung nicht als Einschränkungen der vorliegenden Erfindung verstanden werden kann. Die verwendeten Begriffe "erste", "zweite" oder andere ähnliche Begriffe in den spezifischen Beschreibungen stellen keine Reihenfolge, Anzahl oder Wichtigkeit dar, sondern dienen nur zur Unterscheidung zwischen verschiedenen Bestandteilen. Zudem bedeutet der Begriff "mehr" zwei oder mehr als zwei, sofern nicht anders ausdrücklich und spezifisch definiert.

Es ist anzugeben, dass die Ausführungsbeispiele und die Merkmale in verschiedenen Ausführungsbeispielen der vorliegenden Erfindung in konfliktfreiem Fall miteinander kombiniert werden können.

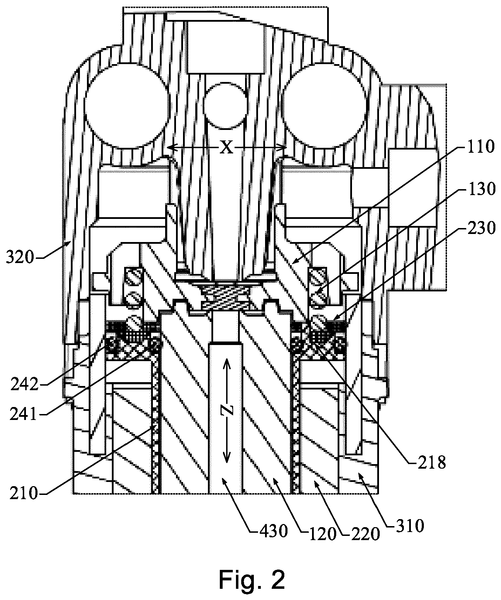

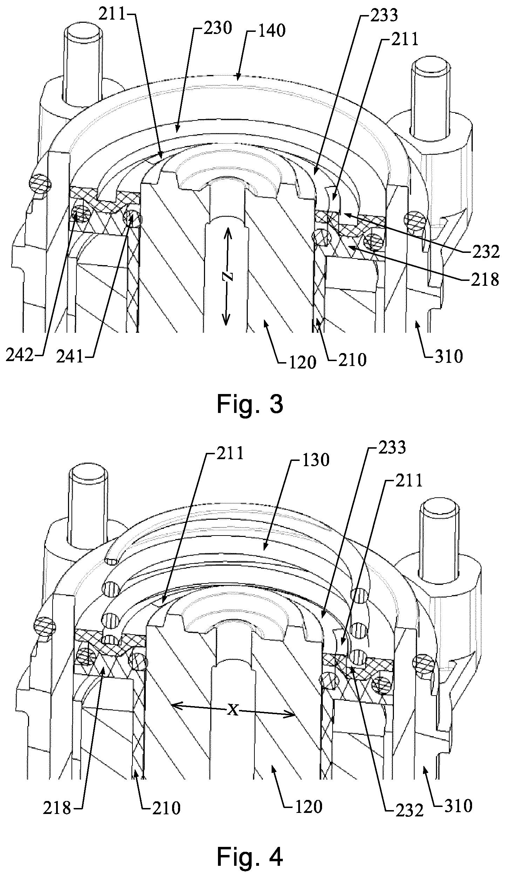

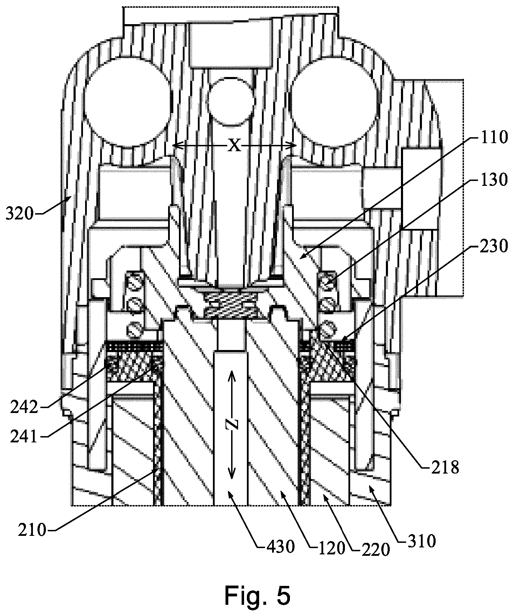

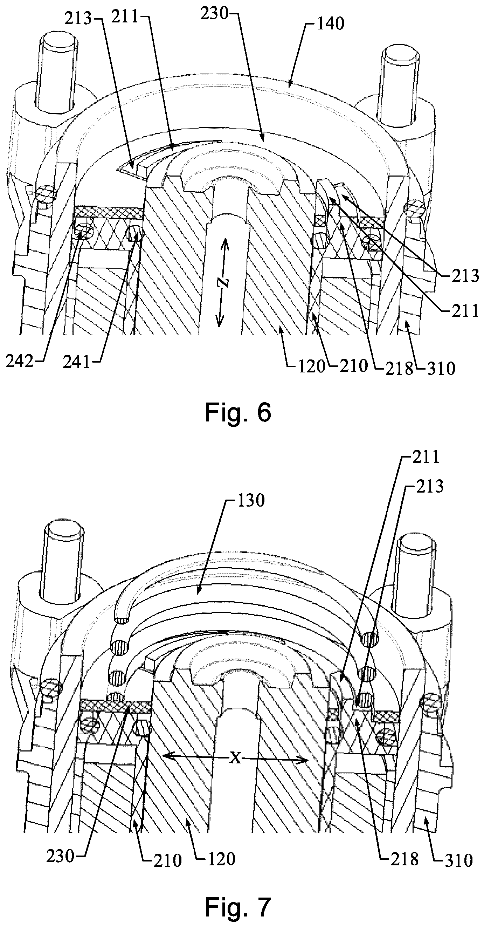

Fig. 2 bis 4 zeigen jeweils eine schematische Ansicht einer Teilstruktur eines Magnetventils gemäß einem Ausführungsbeispiel der vorliegenden Erfindung, und Fig. 5 bis 7 zeigen jeweils eine schematische Ansicht einer Teilstruktur eines Magnetventils gemäß einem weiteren Ausführungsbeispiel der vorliegenden Erfindung. Wie in Verbindung mit den Figuren 2 bis 7 gezeigt, umfasst ein Magnetventil nach einem Ausführungsbeispiel der vorliegenden Erfindung:

einen beweglichen Eisenkern 110 und einen feststehenden Eisenkern 120, die einander gegenüberliegend angeordnet sind, eine Feder 130, die den beweglichen Eisenkern 110 elastisch trägt, eine Spulenanordnung, die außerhalb des feststehenden Eisenkerns 120 angeordnet ist, und ein erstes Gehäuse 310, das durch Umspritzen außerhalb der Spulenanordnung ausgebildet ist, wobei die Spulenanordnung einen Spulenrahmen 210, der auf dem feststehenden Eisenkern 120 aufgesetzt ist, und eine Unterlegscheibe 230 umfasst.

Dabei stehen die Unterlegscheibe 230 und eine Endfläche 218 des Spulenrahmens 210 in einer Axialrichtung Z miteinander in Eingriff.

Die Endfläche 218 des Spulenrahmens 210 und/oder die Unterlegscheibe 230 begrenzen/begrenzt den beweglichen Eisenkern 110 und die Feder 130 in der Axialrichtung Z, und die Endfläche 218 des Spulenrahmens 210 und/oder die Unterlegscheibe 230 begrenzen/begrenzt die Feder 130 in einer Radialrichtung X.

Die Hauptstruktur des Magnetventils kann wie in Fig. 1 dargestellt sein, wobei gleiche Teile nicht mehr wiederholt beschrieben werden. In den Ausführungsbeispielen der vorliegenden Erfindung werden vor allem die strukturellen Änderungen des Spulenrahmens 210 und der Unterlegscheibe 230 und daraus resultierend die Änderungen der begrenzenden Struktur des beweglichen Eisenkerns 110 und der Feder 130, die Änderungen des Montagevorgangs des Magnetventils und dergleichen beschrieben.

In den Ausführungsbeispielen der vorliegenden Erfindung kann die begrenzende Abstützung des beweglichen Eisenkerns 110 in der Axialrichtung Z entweder durch die Endfläche 218 des Spulenrahmens 210 oder durch die Unterlegscheibe 230 oder sowohl durch die Endfläche 218 des Spulenrahmens 210 als auch durch die Unterlegscheibe 230 erfolgen. Für den Fall, dass die Unterlegscheibe 230 und die Endfläche 218 des Spulenrahmens 210 in der Axialrichtung Z miteinander in Eingriff stehen, ist insbesondere vorgesehen, dass an der Unterlegscheibe 230 ein Stützabschnitt vorgesehen sein kann, der an den beweglichen Eisenkern 110 angepasst ist und der den beweglichen Eisenkern 110 in der Axialrichtung Z begrenzen kann, und/oder dass an der Endfläche 218 des Spulenrahmens 210 ein Stützabschnitt vorgesehen sein kann, der an den beweglichen Eisenkern 110 angepasst ist und der den beweglichen Eisenkern 110 in der Axialrichtung Z begrenzen kann, so dass die Begrenzung des beweglichen Eisenkerns 110 in der Axialrichtung Z durch die Endfläche 218 des Spulenrahmens 210 und/oder die Unterlegscheibe 230 erfolgen kann. Dabei kann die begrenzende Abstützung der Feder 130 in der Axialrichtung Z entweder durch die Endfläche 218 des Spulenrahmens 210 oder durch die Unterlegscheibe 230 oder sowohl durch die Endfläche 218 des Spulenrahmens 210 als auch durch die Unterlegscheibe 230 erfolgen. Für den Fall, dass die Unterlegscheibe 230 und die Endfläche 218 des Spulenrahmens 210 in der Axialrichtung Z miteinander in Eingriff stehen, ist insbesondere vorgesehen, dass an der Unterlegscheibe 230 ein Stützabschnitt vorgesehen sein kann, der an die Feder 130 angepasst ist und der die Feder 130 in der Axialrichtung Z begrenzen kann, und/oder dass an der Endfläche 218 des Spulenrahmens 210 ein Stützabschnitt vorgesehen sein kann, der an die Feder 130 angepasst ist und der die Feder 130 in der Axialrichtung Z begrenzen kann, so dass die Begrenzung der Feder 130 in der Axialrichtung Z durch die Endfläche 218 des Spulenrahmens 210 und/oder die Unterlegscheibe 230 erfolgen kann. Ferner ist vorgesehen, dass die begrenzende Abstützung der Feder 130 in der Radialrichtung X entweder durch die Endfläche 218 des Spulenrahmens 210 oder durch die Unterlegscheibe 230 oder sowohl durch die Endfläche 218 des Spulenrahmens 210 als auch durch die Unterlegscheibe 230 erfolgen kann. Für den Fall, dass die Unterlegscheibe 230 und die Endfläche 218 des Spulenrahmens 210 in der Axialrichtung Z miteinander in Eingriff stehen, ist insbesondere vorgesehen, dass an der Unterlegscheibe 230 ein Stützabschnitt vorgesehen sein kann, der an die Feder 130 angepasst ist und der die Feder 130 in der Radialrichtung X begrenzen kann, und/oder dass an der Endfläche 218 des Spulenrahmens 210 ein Stützabschnitt vorgesehen sein kann, der an die Feder 130 angepasst ist und der die Feder 130 in der Radialrichtung X begrenzen kann, so dass die Begrenzung der Feder 130 in der Radialrichtung X durch die Endfläche 218 des Spulenrahmens 210 und/oder die Unterlegscheibe 230 erfolgen kann.

Dadurch, dass die Unterlegscheibe 230 und die Endfläche 218 des Spulenrahmens 210 in der Axialrichtung Z miteinander in Eingriff stehen, wird der belegte Raum der Unterlegscheibe 230 und der Endfläche 218 des Spulenrahmens 210 in der Axialrichtung Z zusammengedrückt, wodurch der belegte Raum des Körpers (d. h. des Wickelfensters, in dem eine Spule 220 gewickelt ist) des Spulenrahmens 210 vergrößert wird. Auf diese Weise ist es möglich, die Wicklung und die elektromagnetische Kraft des Magnetventils zu optimieren, ohne die Konturabmessung und die Schnittstellengröße des Magnetventils zu verändern, was eine mögliche Nachrüstung des Magnetventils ermöglicht. Zudem sind die Endfläche 218 des Spulenrahmens 210 und die Unterlegscheibe 230 derart ausgestaltet, dass sie miteinander in Eingriff stehen, was eine feste und zuverlässige Montagestruktur der beiden ermöglicht, wodurch die Stabilität des Magnetventils gewährleistet wird.

Dadurch, dass die Endfläche 218 des Spulenrahmens 210 und/oder die Unterlegscheibe 230 den beweglichen Eisenkern 110 und die Feder 130 in der Axialrichtung Z begrenzen/begrenzt, muss an dem Spulenrahmen 210 keine den beweglichen Eisenkern 110 und die Feder 130 begrenzende Spritzgussstruktur ausgebildet sein. Dadurch müssen die Dichtungsringe (einschließlich eines ersten Dichtungsrings 241 und eines zweiten Dichtungsrings 242) nicht vor dem Spritzgussvorgang vormontiert werden, sondern können nach Abschluss des Spritzgussvorgangs und vor der Montage der Unterlegscheibe 230 montiert werden, wodurch das Problem der spritzgussbedingten Alterung des Dichtungsrings wirksam vermieden und die Dichtungsleistung des Magnetventils gewährleistet wird. Zudem werden/wird die Endfläche 218 des Spulenrahmens 210 und/oder die Unterlegscheibe 230 anstelle der Spritzgussstruktur zur Begrenzung des beweglichen Eisenkerns 110 und der Feder 130 verwendet, so dass die Spritzgussstelle unter hoher Temperatur und hohem Druck weiter von der Montagestelle des Dichtungsrings entfernt ist, um eine Verformung der Montagestelle des Dichtrings durch Wärme zu vermeiden.

Dadurch, dass die Endfläche 218 des Spulenrahmens 210 und/oder die Unterlegscheibe 230 die Feder 130 in der Radialrichtung X begrenzen/begrenzt, wird eine Positionsverschiebung der Feder 130 im Betrieb des Magnetventils vermieden und eine normale Betätigung des beweglichen Eisenkerns 110 und damit eine normale Funktion des Magnetventils sichergestellt. Insbesondere kann sich der bewegliche Eisenkern 110 unter der Wirkung der Spule 220 in eine erste Betriebsposition bewegen, wobei durch ein Ende des beweglichen Eisenkerns 110 ein Auslasskanal 430 blockiert wird, so dass eine Einlassöffnung und eine Auslassöffnung des Magnetventils miteinander verbunden sind. Dabei begrenzen/begrenzt die Endfläche 218 des Spulenrahmens 210 und/oder die Unterlegscheibe 230 den beweglichen Eisenkern 110 und die Feder 130 in der Axialrichtung Z, um zu vermeiden, dass der bewegliche Eisenkern 110 den feststehenden Eisenkern 120 berührt und die Feder 130 durch übermäßige Kompression ihre Rückstellfunktion verliert. Zusätzlich begrenzen/begrenzt die Endfläche 218 des Spulenrahmens 210 und/oder die Unterlegscheibe 230 die Feder 130 in der Radialrichtung X, um zu vermeiden, dass die Feder 130 bei einer Positionsverschiebung nicht mehr wirksam zurückstellen kann. Ferner ist vorgesehen, dass sich der bewegliche Eisenkern 110 unter der Wirkung der Feder 130 in eine zweite Betriebsposition bewegen kann, wobei durch das andere Ende des beweglichen Eisenkerns 110 die Einlassöffnung blockiert wird, so dass der Auslasskanal 430 und die Auslassöffnung miteinander verbunden sind.

Wie in Verbindung mit den Figuren 2 bis 7 gezeigt, ist in einigen Ausführungsbeispielen vorgesehen, dass die Endfläche 218 des Spulenrahmens 210 mit einem ersten Stützabschnitt 211, der zur Unterlegscheibe 230 hin vorsteht, versehen ist, wobei der erste Stützabschnitt 211 durch ein Schlitzloch in der Unterlegscheibe 230 hindurchgeht. Dabei begrenzt eine Endfläche des ersten Stützabschnitts 211 den beweglichen Eisenkern 110 in der Axialrichtung Z, und eine Seitenwand des ersten Stützabschnitts 211 begrenzt die Feder 130 in der Radialrichtung X.

Dadurch, dass der erste Stützabschnitt 211 durch das Schlitzloch in der Unterlegscheibe 230 hindurchgeht, wird ermöglicht, dass die Unterlegscheibe 230 und die Endfläche 218 des Spulenrahmens 210 in der Axialrichtung Z miteinander in Eingriff stehen. Insbesondere kann der erste Stützabschnitt 211 mehrere am Umfang voneinander beabstandete Teile umfassen. Beispielsweise kann der erste Stützabschnitt 211 insbesondere in Abhängigkeit von der Endflächenstruktur des beweglichen Eisenkerns 110 als Struktur mit zwei Klauen oder drei Klauen usw. ausgebildet sein, um eine begrenzende Abstützung des beweglichen Eisenkerns 110 in der Axialrichtung Z zu realisieren. Zusätzlich dient die Seitenwand des ersten Stützabschnitts 211 zur Begrenzung der Feder 130 in der Radialrichtung X, um somit eine Positionsverschiebung der Feder 130 zu verhindern.

Wie in Verbindung mit den Figuren 2 bis 4 gezeigt, ist in einigen Ausführungsbeispielen vorgesehen, dass die Unterlegscheibe 230 mit einem zweiten Stützabschnitt 232, der zur Endfläche 218 des Spulenrahmens 210 hin vorsteht, versehen ist, wobei der zweite Stützabschnitt 232 in eine Nut in der Endfläche des Spulenrahmens 210 fällt. Dabei begrenzt eine untere Fläche des zweiten Stützabschnitts 232 die Feder 130 in der Axialrichtung Z und eine Seitenwand des zweiten Stützabschnitts 232 begrenzt die Feder 130 in der Radialrichtung X, und eine innere Ringsendfläche 233 des zweiten Stützabschnitts 232 begrenzt den beweglichen Eisenkern 110 in der Axialrichtung Z.

Dadurch, dass der zweite Stützabschnitt 232 in die Nut in der Endfläche des Spulenrahmens 210 fällt, wird ermöglicht, dass die Unterlegscheibe 230 und die Endfläche 218 des Spulenrahmens 210 in der Axialrichtung Z miteinander in Eingriff stehen. Insbesondere kann der zweite Stützabschnitt 232 als ringförmige Nutenstruktur oder als eine weitere an die Feder 130 angepasste Nutenstruktur ausgebildet sein, so dass er mit seiner unteren Fläche der Feder 130 eine zuverlässige begrenzende Abstützung in der Axialrichtung Z bietet und mit seiner Seitenwand die Feder 130 auch in der Radialrichtung X begrenzt, um eine Positionsverschiebung der Feder 130 zu verhindern. Zudem kann die innere Ringsendfläche 233 des zweiten Stützabschnitts 232 mit der Endfläche des ersten Stützabschnitts 211 zusammenwirken, um den beweglichen Eisenkern 110 in der Axialrichtung Z zu begrenzen.

In den Ausführungsbeispielen gemäß Fig. 2 bis 4 kann die Unterlegscheibe 230 als V-förmige Struktur mit einem Schlitzloch in einer inneren Seitenwand ausgebildet sein, so dass eine sehr feste Montagestruktur zwischen der Unterlegscheibe 230 und dem Spulenrahmen 210 durch einen solchen Eingriff erreicht wird, bei dem der erste Stützabschnitt 211 des Spulenrahmens 210 durch das Schlitzloch in der inneren Seitenwand der Unterlegscheibe 230 hindurchgeht und der zweite Stützabschnitt 232 der Unterlegscheibe 230 in die Nut in der Endfläche des Spulenrahmens 210 fällt. Auf diese Weise kann die Oberseite des Wickelfensters des Spulenrahmens 210 um mindestens 2,81 mm nach oben und zusätzlich die Unterseite des Wickelfensters des Spulenrahmens 210 um etwa 0,44 mm nach unten verschoben werden, wodurch das Wickelfenster des Spulenrahmens 210 in der Axialrichtung Z um etwa 3,25 mm vergrößert wird. Dies ermöglicht eine effektive Vergrößerung des Wickelfensters auf begrenztem Raum, um die Wicklung und die elektromagnetische Kraft des Magnetventils zu optimieren und damit eine mögliche Nachrüstung des Magnetventils zu bieten.

In den Ausführungsbeispielen gemäß Fig. 2 bis 4 wird die stabile und zuverlässige begrenzende Abstützung für den beweglichen Eisenkern 110 und die Feder 130 dadurch erreicht, dass die Endfläche des ersten Stützabschnitts 211 und die innere Ringsendfläche 233 des zweiten Stützabschnitts 232 gemeinsam den beweglichen Eisenkern 110 in der Axialrichtung Z begrenzen, dass die untere Fläche des zweiten Stützabschnitts 232 die Feder 130 in der Axialrichtung Z begrenzt, und dass die Seitenwand des ersten Stützabschnitts 211 und die Seitenwand des zweiten Stützabschnitts 232 gemeinsam die Feder 130 in der Radialrichtung X begrenzen.

Wie in Verbindung mit den Figuren 5 bis 7 gezeigt, ist in einigen Ausführungsbeispielen vorgesehen, dass die Endfläche 218 des Spulenrahmens 210 auch mit einem dritten Stützabschnitt 213 versehen ist, der zur Unterlegscheibe 230 hin vorsteht und mit dem ersten Stützabschnitt 211 zu einem abgestuften Abschnitt verbunden ist. Dabei liegt der abgestufte Abschnitt an dem Schlitzloch der Unterlegscheibe 230 frei, und die Unterlegscheibe 230 und der dritte Stützabschnitt 213 begrenzen die Feder 130 in der Axialrichtung Z.

Dadurch, dass der abgestufte Abschnitt an dem Schlitzloch der Unterlegscheibe 230 freiliegt, wird der Eingriff der Unterlegscheibe 230 mit der Endfläche 218 des Spulenrahmens 210 in der Axialrichtung Z realisiert. Insbesondere kann die Unterlegscheibe 230 als ebene, ringförmige Struktur mit einem Schlitzloch ausgebildet sein, um zusammen mit dem dritten Stützabschnitt 213 die Feder 130 in der Axialrichtung Z zu begrenzen.

In den Ausführungsbeispielen gemäß Fig. 5 bis 7 wird der Eingriff der Unterlegscheibe 230 und der Endfläche 218 des Spulenrahmens 210 dadurch erreicht, dass der erste Stützabschnitt 211 und der dritte Stützabschnitt 213 des Spulenrahmens 210 durch das Schlitzloch in der Unterlegscheibe 230 hindurchgehen. Auf diese Weise kann die Oberseite des Wickelfensters des Spulenrahmens 210 um etwa 1,65 mm nach oben und die Unterseite des Wickelfensters des Spulenrahmens 210 um etwa 0,44 mm nach unten verschoben werden, wodurch das Wickelfenster des Spulenrahmens 210 in der Axialrichtung Z um etwa 2,09 mm vergrößert wird. Dies ermöglicht eine effektive Vergrößerung des Wickelfensters auf begrenztem Raum, um die Wicklung und die elektromagnetische Kraft des Magnetventils zu optimieren und damit eine mögliche Nachrüstung des Magnetventils zu bieten.

In den Ausführungsbeispielen gemäß Fig. 5 bis 7 wird die wirksame begrenzende Abstützung für den beweglichen Eisenkern 110 und die Feder 130 auch dadurch erreicht, dass die Endfläche des ersten Stützabschnitts 211 den beweglichen Eisenkern 110 in der Axialrichtung Z begrenzt, dass die Unterlegscheibe 230 und der dritte Stützabschnitt 213 gemeinsam die Feder 130 in der Axialrichtung Z begrenzen, und dass die Seitenwand des ersten Stützabschnitts 211 die Feder 130 in der Radialrichtung X begrenzt.

In anderen Ausführungsbeispielen können die Unterlegscheibe 230 und die Endfläche 218 des Spulenrahmens 210 andere strukturelle Merkmale aufweisen, solange folgendes erreicht werden kann, dass die Unterlegscheibe 230 und die Endfläche 218 des Spulenrahmens 210 in der Axialrichtung Z miteinander in Eingriff stehen, dass die Endfläche 218 des Spulenrahmens 210 und/oder die Unterlegscheibe 230 den beweglichen Eisenkern 110 und die Feder 130 in der Axialrichtung Z begrenzen/begrenzt, und dass die Endfläche 218 des Spulenrahmens 210 und/oder die Unterlegscheibe 230 die Feder 130 in der Radialrichtung X begrenzen/begrenzt.

Wie in Verbindung mit den Figuren 2 bis 7 gezeigt, ist ferner vorgesehen, dass ein erster Dichtungsring 241 an einer Innenwand in der Endfläche des Spulenrahmens 210 montiert ist, wobei der erste Dichtungsring 241 durch eine innere Umfangskante der Unterlegscheibe 230 gedrückt und abgedeckt ist; und dass ein zweiter Dichtungsring 242 an einer Außenwand in der Endfläche des Spulenrahmens 210 montiert ist, wobei der zweite Dichtungsring 242 durch eine äußere Umfangskante der Unterlegscheibe 230 gedrückt und abgedeckt ist. Die stabile Montage des ersten Dichtungsrings 241 und des zweiten Dichtungsrings 242 wird dadurch erreicht, dass die jeweiligen Nuten der Dichtungsringe des Spulenrahmens 210 mit den inneren und äußeren Umfangskanten der Unterlegscheibe 230 zusammenpassen, um die Abdichtung des Luftkreislaufs des Magnetventils zu gewährleisten. Dadurch, dass der erste Dichtungsring 241 und der zweite Dichtungsring 242 durch die Unterlegscheibe 230 gedrückt und abgedeckt sind, ist zudem die Spritzgussstelle unter hoher Temperatur und hohem Druck weiter von der Montagestelle des jeweiligen Dichtungsrings entfernt, um eine Verformung der Montagestelle des jeweiligen Dichtrings durch Wärme zu vermeiden.

Gemäß einem Ausführungsbeispiel der vorliegenden Erfindung wird ferner ein Verfahren zur Montage eines Magnetventils bereitgestellt, das zur Montage eines Magnetventils nach einem der obigen Ausführungsbeispiele dient. Die Merkmale und Prinzipien des Magnetventils nach einem der obigen Ausführungsbeispiele können auf die folgenden Ausführungsbeispiele des Montageverfahrens angewendet werden. In den folgenden Ausführungsbeispielen des Montageverfahrens werden die bereits erläuterten Merkmale und Prinzipien des Magnetventils nicht mehr wiederholt.

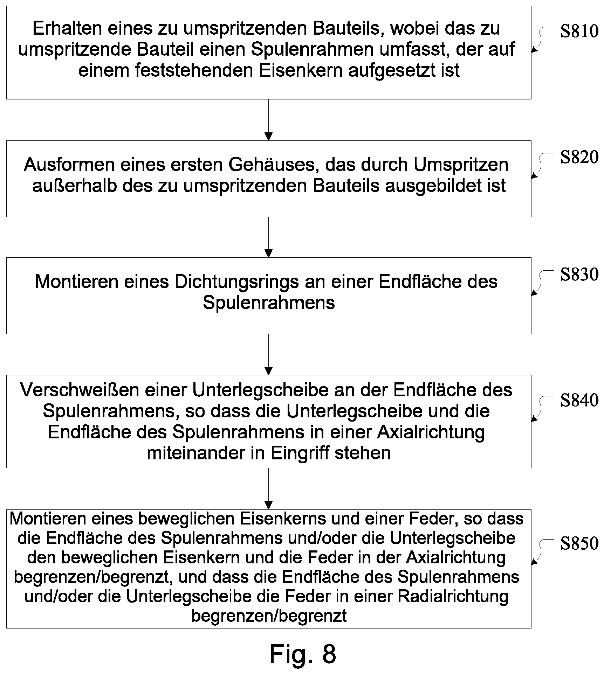

Fig. 8 zeigt schematisch Hauptschritte des Verfahrens zur Montage des Magnetventils gemäß einem Ausführungsbeispiel der vorliegenden Erfindung. Wie in Verbindung mit den Figuren 2 bis 8 gezeigt, umfasst das Verfahren zur Montage des Magnetventils nach einem Ausführungsbeispiel der vorliegenden Erfindung:
S810: Erhalten eines zu umspritzenden Bauteils, wobei das zu umspritzende Bauteil einen Spulenrahmen 210 umfasst, der auf einem feststehenden Eisenkern 120 aufgesetzt ist. Ferner kann die Spule 220 auf den Spulenrahmen 210 gewickelt werden, und ein Jocheisen 140 kann außerhalb des Spulenrahmens 210 angeordnet sein.

S820: Ausformen eines ersten Gehäuses 310, das durch Umspritzen außerhalb des zu umspritzenden Bauteils ausgebildet ist. Dabei kann das erste Gehäuse 310 derart ausgeformt sein, dass das zu umspritzende Bauteil in eine Form zum Spritzgießen eingesetzt wird.

S830: Montieren eines Dichtungsrings an einer Endfläche 218 des Spulenrahmens 210. Bei dem Dichtungsring handelt es sich um einen ersten Dichtungsring 241 bzw. einen zweiten Dichtungsring 242.

S840: Verschweißen einer Unterlegscheibe 230 an der Endfläche 218 des Spulenrahmens 210, so dass die Unterlegscheibe 230 und die Endfläche 218 des Spulenrahmens 210 in einer Axialrichtung Z miteinander in Eingriff stehen. Dadurch, dass die Unterlegscheibe 230 und die Endfläche 218 des Spulenrahmens 210 in der Axialrichtung Z miteinander in Eingriff stehen, wird der belegte Raum der Unterlegscheibe 230 und der Endfläche 218 des Spulenrahmens 210 in der Axialrichtung Z zusammengedrückt, wodurch der belegte Raum des Wickelfensters des Spulenrahmens 210 vergrößert wird. Auf diese Weise ist es möglich, die Wicklung und die elektromagnetische Kraft des Magnetventils zu optimieren, ohne die Konturabmessung und die Schnittstellengröße des Magnetventils zu verändern, was eine mögliche Nachrüstung des Magnetventils ermöglicht. Zudem sind die Endfläche 218 des Spulenrahmens 210 und die Unterlegscheibe 230 derart ausgestaltet, dass sie miteinander in Eingriff stehen, was eine feste und zuverlässige Montagestruktur der beiden ermöglicht, wodurch die Stabilität des Magnetventils gewährleistet wird.

S850: Montieren eines beweglichen Eisenkerns 110 und einer Feder 130, so dass die Endfläche 218 des Spulenrahmens 210 und/oder die Unterlegscheibe 230 den beweglichen Eisenkern 110 und die Feder 130 in der Axialrichtung Z begrenzen/begrenzt, und dass die Endfläche 218 des Spulenrahmens 210 und/oder die Unterlegscheibe 230 die Feder 130 in einer Radialrichtung X begrenzen/begrenzt. Außerhalb des beweglichen Eisenkerns 110 und der Feder 130 kann ferner ein zweites Gehäuse 320 vorgesehen sein.

Dadurch, dass die Endfläche 218 des Spulenrahmens 210 und/oder die Unterlegscheibe 230 den beweglichen Eisenkern 110 und die Feder 130 in der Axialrichtung Z begrenzen/begrenzt, muss an dem Spulenrahmen 210 keine den beweglichen Eisenkern 110 und die Feder 130 begrenzende Spritzgussstruktur ausgebildet sein. Dadurch müssen der erste Dichtungsring 241 und der zweite Dichtungsring 242 nicht vor dem Spritzgussvorgang vormontiert werden, sondern können nach Abschluss des Spritzgussvorgangs und vor der Montage der Unterlegscheibe 230 montiert werden, wodurch das Problem der spritzgussbedingten Alterung des Dichtungsrings wirksam vermieden und die Dichtungsleistung des Magnetventils gewährleistet wird. Zudem werden/wird die Endfläche 218 des Spulenrahmens 210 und/oder die Unterlegscheibe 230 anstelle der Spritzgussstruktur zur Begrenzung des beweglichen Eisenkerns 110 und der Feder 130 verwendet, so dass die Spritzgussstelle unter hoher Temperatur und hohem Druck weiter von der Montagestelle des Dichtungsrings entfernt ist, um eine Verformung der Montagestelle des Dichtrings durch Wärme zu vermeiden.

Dadurch, dass die Endfläche 218 des Spulenrahmens 210 und/oder die Unterlegscheibe 230 die Feder 130 in der Radialrichtung X begrenzen/begrenzt, wird eine Positionsverschiebung der Feder 130 im Betrieb des Magnetventils vermieden und eine normale Betätigung des beweglichen Eisenkerns 110 und damit eine normale Funktion des Magnetventils sichergestellt. Im Betrieb des Magnetventils kann sich der bewegliche Eisenkern 110 unter der Wirkung der Spule 220 in eine erste Betriebsposition bewegen, wobei durch ein Ende des beweglichen Eisenkerns 110 der Auslasskanal 430 blockiert wird, so dass die Einlassöffnung, die in dem zweiten Gehäuse 320 angeordnet sein kann, und die Auslassöffnung, die in dem ersten Gehäuse 310 angeordnet sein kann, des Magnetventils miteinander verbunden sind. Dabei begrenzen/begrenzt die Endfläche 218 des Spulenrahmens 210 und/oder die Unterlegscheibe 230 den beweglichen Eisenkern 110 und die Feder 130 in der Axialrichtung Z, um zu vermeiden, dass der bewegliche Eisenkern 110 den feststehenden Eisenkern 120 berührt und die Feder 130 durch übermäßige Kompression ihre Rückstellfunktion verliert. Zusätzlich begrenzen/begrenzt die Endfläche 218 des Spulenrahmens 210 und/oder die Unterlegscheibe 230 die Feder 130 in der Radialrichtung X, um zu vermeiden, dass die Feder 130 bei einer Positionsverschiebung nicht mehr wirksam zurückstellen kann. Ferner ist vorgesehen, dass sich der bewegliche Eisenkern 110 unter der Wirkung der Feder 130 in eine zweite Betriebsposition bewegen kann, wobei durch das andere Ende des beweglichen Eisenkerns 110 die Einlassöffnung blockiert wird, so dass der Auslasskanal 430 und die Auslassöffnung miteinander verbunden sind.

Es ist anzugeben, dass der in Fig. 8 dargestellte Ablauf nur zur beispielhaften Veranschaulichung dient und nicht unbedingt alle Schritte umfasst. Beispielsweise können einige Schritte aufgeteilt werden, einige Schritte können kombiniert oder teilweise kombiniert werden, und die tatsächliche Durchführungsreihenfolge kann sich je nach der tatsächlichen Situation ändern.

Der obige Inhalt ist eine weitere detaillierte Beschreibung der vorliegenden Erfindung in Verbindung mit spezifischen bevorzugten Ausführungsformen und darf nicht als Beschränkung der spezifischen Ausführung der vorliegenden Erfindung angesehen werden. Für die Durchschnittsfachleute auf dem Gebiet, zu dem die vorliegende Erfindung gehört, können mehrere einfache Ableitungen oder Substitutionen ohne Abweichen von dem Konzept der vorliegenden Erfindung ausgeführt werden, die vom Schutzbereich der vorliegenden Erfindung umfasst sein sollten.

## Patentansprüche

1. Magnetventil, umfassend einen beweglichen Eisenkern und einen feststehenden Eisenkern, die einander gegenüberliegend angeordnet sind, eine Feder, die den beweglichen Eisenkern elastisch trägt, eine Spulenanordnung, die außerhalb des feststehenden Eisenkerns angeordnet ist, und ein erstes Gehäuse, das durch Umspritzen außerhalb der Spulenanordnung ausgebildet ist, wobei die Spulenanordnung einen Spulenrahmen, der auf dem feststehenden Eisenkern aufgesetzt ist, und eine Unterlegscheibe umfasst, **dadurch gekennzeichnet, dass**
die Unterlegscheibe und eine Endfläche des Spulenrahmens in einer Axialrichtung miteinander in Eingriff stehen, wobei
die Endfläche des Spulenrahmens und/oder die Unterlegscheibe den beweglichen Eisenkern und die Feder in der Axialrichtung begrenzen/begrenzt, und wobei die Endfläche des Spulenrahmens und/oder die Unterlegscheibe die Feder in einer Radialrichtung begrenzen/begrenzt.

2. Magnetventil nach Anspruch 1, **dadurch gekennzeichnet, dass** die Endfläche des Spulenrahmens mit einem ersten Stützabschnitt, der zur Unterlegscheibe hin vorsteht, versehen ist, wobei der erste Stützabschnitt durch ein Schlitzloch in der Unterlegscheibe hindurchgeht, wobei
eine Endfläche des ersten Stützabschnitts den beweglichen Eisenkern in der Axialrichtung begrenzt, und wobei eine Seitenwand des ersten Stützabschnitts die Feder in der Radialrichtung begrenzt.

3. Magnetventil nach Anspruch 2, **dadurch gekennzeichnet, dass** die Unterlegscheibe mit einem zweiten Stützabschnitt, der zur Endfläche des Spulenrahmens hin vorsteht, versehen ist, wobei der zweite Stützabschnitt in eine Nut in der Endfläche des Spulenrahmens fällt, wobei
eine untere Fläche des zweiten Stützabschnitts die Feder in der Axialrichtung begrenzt und eine Seitenwand des zweiten Stützabschnitts die Feder in der Radialrichtung begrenzt, und wobei eine innere Ringsendfläche des zweiten Stützabschnitts den beweglichen Eisenkern in der Axialrichtung begrenzt.

4. Magnetventil nach Anspruch 3, **dadurch gekennzeichnet, dass** der zweite Stützabschnitt als ringförmige Nutenstruktur und die Unterlegscheibe als V-förmige Struktur mit dem Schlitzloch in einer inneren Seitenwand ausgebildet ist.

5. Magnetventil nach Anspruch 2, **dadurch gekennzeichnet, dass** die Endfläche des Spulenrahmens auch mit einem dritten Stützabschnitt versehen ist, der zur Unterlegscheibe hin vorsteht und mit dem ersten Stützabschnitt zu einem abgestuften Abschnitt verbunden ist, wobei
der abgestufte Abschnitt an dem Schlitzloch freiliegt, und wobei die Unterlegscheibe und der dritte Stützabschnitt die Feder in der Axialrichtung begrenzen.

6. Magnetventil nach Anspruch 5, **dadurch gekennzeichnet, dass** die Unterlegscheibe als ebene, ringförmige Struktur mit dem Schlitzloch ausgebildet ist.

7. Magnetventil nach Anspruch 2, **dadurch gekennzeichnet, dass** der erste Stützabschnitt mehrere am Umfang voneinander beabstandete Teile umfasst.

8. Magnetventil nach Anspruch 1, **dadurch gekennzeichnet, dass** ein erster Dichtungsring an einer Innenwand der Endfläche des Spulenrahmens montiert ist, wobei der erste Dichtungsring durch eine innere Umfangskante der Unterlegscheibe gedrückt und abgedeckt ist.

9. Magnetventil nach Anspruch 1, **dadurch gekennzeichnet, dass** ein zweiter Dichtungsring an einer Außenwand der Endfläche des Spulenrahmens montiert ist, wobei der zweite Dichtungsring durch eine äußere Umfangskante der Unterlegscheibe gedrückt und abgedeckt ist.

10. Verfahren zur Montage eines Magnetventils, **dadurch gekennzeichnet, dass** es zur Montage eines Magnetventils nach einem der Ansprüche 1 bis 9 dient, wobei das Verfahren umfasst:
Erhalten eines zu umspritzenden Bauteils, wobei das zu umspritzende Bauteil einen Spulenrahmen umfasst, der auf einem feststehenden Eisenkern aufgesetzt ist;
Ausformen eines ersten Gehäuses, das durch Umspritzen außerhalb des zu umspritzenden Bauteils ausgebildet ist;
Montieren eines Dichtungsrings an einer Endfläche des Spulenrahmens;
Verschweißen einer Unterlegscheibe an der Endfläche des Spulenrahmens, so dass die Unterlegscheibe und die Endfläche des Spulenrahmens in einer Axialrichtung miteinander in Eingriff stehen; und
Montieren eines beweglichen Eisenkerns und einer Feder, so dass die Endfläche des Spulenrahmens und/oder die Unterlegscheibe den beweglichen Eisenkern und die Feder in der Axialrichtung begrenzen/begrenzt, und dass die Endfläche des Spulenrahmens und/oder die Unterlegscheibe die Feder in einer Radialrichtung begrenzen/begrenzt.
